# EUROPEAN PATENT APPLICATION

(11) **EP 4 618 295 A1**
(43) Date of publication of application: **17.09.2025**
(21) Application number: 24898949.3
(22) Date of filing: 21.08.2024
(51) Int. Cl.: H01M 50/474, H01M 50/477, H01M 50/103, H01M 50/15, H01M 10/04

(54) **SPACER, BATTERY CELL, AND VEHICLE**

(30) Priority: 06.12.2023 CN 202323329922 U
(71) Applicant: ZHEJIANG ZEEKR INTELLIGENT TECHNOLOGY CO., LTD., Ningbo, Zhejiang 315899 (CN); VIRIDI E-MOBILITY TECHNOLOGY (NINGBO) CO., LTD., Ningbo, Zhejiang 315336 (CN); Zhejiang Geely Holding Group Co., Ltd., Hangzhou, Zhejiang 310051 (CN)
(72) Inventor: YU, Dongpeng, Ningbo, Zhejiang 315899 (CN); WANG, Cong, Ningbo, Zhejiang 315899 (CN)
(74) Representative: Michalski Hüttermann & Partner Patentanwälte mbB
(86) International application number: PCT/CN2024/113687
(87) International publication number: WO 2025/118701

(57) **Abstract**

The present disclosure provides a spacer, a battery unit, and a vehicle. The spacer includes a spacer body and a traction member. The spacer body includes a first side wall, a second side wall, and a base. The base is connected to the first side wall and the second side wall, respectively, to form a pressure relief groove. The traction member is formed in the pressure relief groove and is fixedly connected to the spacer body. The traction member is configured to be applied with a traction force to drive the spacer to move.

## Description

### CROSS REFERENCE TO RELATED APPLICATIONS

The application claims the benefit of priority to Chinese Patent Application No. 202323329922.0, filed on December 6, 2023, which is incorporated herein by reference in their entireties.

### TECHNICAL FIELD

Embodiments of the present disclosure relate to but are not limited to the field of battery assembly technologies, and in particular, to a spacer, a battery unit, and a vehicle.

### BACKGROUND

In the process of assembling a cell into a housing, a negative electrode cover is generally pushed into the housing by a push rod.

### SUMMARY

The following is a summary of subject matter described in detail herein. This summary is not intended to limit the scope of the claims. The present disclosure provides a spacer, a battery unit, and a vehicle.

According to a first aspect, the present disclosure provides a spacer, including a spacer body and a traction member, where the spacer body includes a first side wall, a second side wall, and a base, the base is connected with the first side wall and the second side wall, respectively, to form a pressure relief groove, the traction member is formed in the pressure relief groove and is fixedly connected to the spacer body, and the traction member is configured to be applied with a traction force to drive the spacer to move.

In some embodiments, the traction member includes a traction rib, and the traction rib is fixedly connected to at least one of the first side wall, the second side wall, or the base.

In some embodiments, the traction member includes a traction rib and a first reinforcing member connected to each other, and the first reinforcing member is fixedly connected to at least one of the first side wall, the second side wall, or the base.

In some embodiments, the traction rib is fixedly connected to the first reinforcing member.

In some embodiments, the traction rib is protrusively provided on the reinforcing member.

In some embodiments, the traction rib includes a first traction portion and a second traction portion coaxially arranged; and the first traction portion and the second traction portion are protrusively provided on two sides of the first reinforcing member respectively.

In some embodiments, the spacer body has a first opening, a plane where an open end of the first opening is located serves as a first surface, and a distance between the first surface and a surface of the traction rib away from the first surface is greater than a thickness of the traction rib.

In some embodiments, the first side wall and the second side wall are spaced apart in a first direction; and the traction rib extends in the first direction.

In some embodiments, the spacer body further includes at least one second reinforcing member formed in the pressure relief groove; and the at least one second reinforcing member is fixedly connected to the first side wall and the second side wall, and the at least one second reinforcing member is spaced apart from the first reinforcing member.

In some embodiments, the base is provided with at least one pressure relief hole, and a shape of the pressure relief hole includes at least one of a waist shape, a circle, an ellipse, or a rectangle.

In some embodiments, the base is provided with a glue injection hole.

In some embodiments, the base is provided with a hollow region, and the hollow region corresponds to a region where the traction rib is located.

In some embodiments, the spacer body includes a bottom wall; the bottom wall is connected to the first side wall and the second side wall, respectively, to form an accommodating groove; and the bottom wall is provided with a gap, and the gap is in communication with the accommodating groove to allow a tab of a cell to pass through the gap, and the tab is partially accommodated in the accommodating groove.

In some embodiments, the spacer body includes a mounting groove for mounting the spacer to the cell; and the bottom wall of the mounting groove is provided with a mounting hole, and the mounting hole is configured for a screw and a bolt to pass through.

According to a second aspect, the present disclosure provides a battery unit, including:
the spacer according to any one of the above embodiments; and
a cell, where one end of the cell is connected with a tab, and at least part of the tab is accommodated in the spacer.

In some embodiments, the tab includes: a positive tab led out from a positive electrode cover of the cell, and a negative tab led out from a negative electrode cover of the cell; and where the spacer is between the cell and the positive electrode cover, and the positive tab is accommodated in an accommodating groove in a body of the spacer.

According to a third aspect, the present disclosure provides a vehicle, including any one of the foregoing spacers.

The present disclosure provides a spacer. The spacer is able to be mounted on the cell of the battery unit. When the cell is assembled into the housing, an operator may connect a traction device to a traction member of the spacer, and a traction force is applied to the traction member by using the traction device to drive the spacer to move, to drive the cell to move, thereby pulling the cell into the housing. In this way, compared with a solution in which the negative electrode cover is pushed by using a push rod to push the cell into the housing, the technical solution of the present disclosure can effectively reduce the risk of damage to the cell caused by an excessively large thrust. Other aspects can be understood upon reading and understanding the drawings and the detailed description.

### BRIEF DESCRIPTION OF THE DRAWINGS

FIG. 1 is a schematic diagram of a cell before assembly.
FIG. 2 is a schematic diagram of assembling a cell.
FIG. 3 is a schematic diagram of a cell after assembly.
FIG. 4 is a schematic diagram of a cell before assembly according to the present disclosure.
FIG. 5 is a schematic diagram of assembling a cell according to the present disclosure.
FIG. 6 is a schematic diagram of a cell after assembly according to the present disclosure.
FIG. 7 is a schematic diagram of a cell before assembly according to another embodiment of the present disclosure;
FIG. 8 is a schematic diagram of assembling a cell according to another embodiment of the present disclosure.
FIG. 9 is a schematic diagram of a cell after assembly according to another embodiment of the present disclosure.
FIG. 10 is a schematic structural diagram of a battery unit according to an embodiment of the present disclosure.
FIG. 11 is a schematic structural diagram of a spacer according to an embodiment of the present disclosure.
FIG. 12 is a schematic structural diagram of a spacer from another perspective according to the present disclosure.
FIG. 13 is a schematic structural diagram of a spacer from another perspective according to the present disclosure.
FIG. 14 is a partial cross-sectional view of FIG. 13.
FIG. 15 is a schematic exploded structural diagram of a battery unit according to an embodiment of the present disclosure.

Reference numerals: 10, spacer; 11, spacer body; 111, first side wall; 112, second side wall; 113, bottom wall; 114, gap; 115, accommodating groove; 116, mounting groove; 117, mounting hole; 118, spacing; 12, base; 121, pressure relief groove; 122, pressure relief hole; 123, hollow region; 124, glue injection hole; 13, second reinforcing member; 15, first opening; 16, traction member; 161, traction rib; 1611, first traction portion; 1612, second traction portion; 162, first reinforcing member; 20, traction device; 30, cell; 31, positive tab; 32, negative tab; 33, positive electrode top patch; 34, negative electrode top patch; 35, positive electrode cover; 36, negative electrode cover; 37, insulation film; 40, housing; 50, push rod.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with some aspects of the present disclosure.

The terminology used herein is for the purpose of describing particular embodiments only and is not intended to limit the disclosure. Unless defined otherwise, technical and scientific terms used herein have the same meaning as is commonly understood by one of ordinary skill in the art to which this disclosure belongs. The terms "first," "second," and the like, as used herein do not denote any order, quantity, or importance, but are merely used to distinguish different components. Also, the terms such as "a" and "an" are not intended to limit the amount, but indicate the existence of at least one, if it refers to "one", it will be explained separately. "A plurality of" or "several" means two or more than two. Unless otherwise indicated, the terms "front," "rear," "lower," and/or "upper," "top," "bottom," etc., are for ease of description only and are not limited to one position or one spatial orientation. Similar words such as "include" or "comprise" mean that elements or objects appearing before "include" or "comprise" cover elements or objects listed after "include" or "comprise" and their equivalents, and do not exclude other elements or objects. The terms "connected," "coupled" and the like are not limited to physical or mechanical connections, and may include electrical connections, whether direct or indirect.

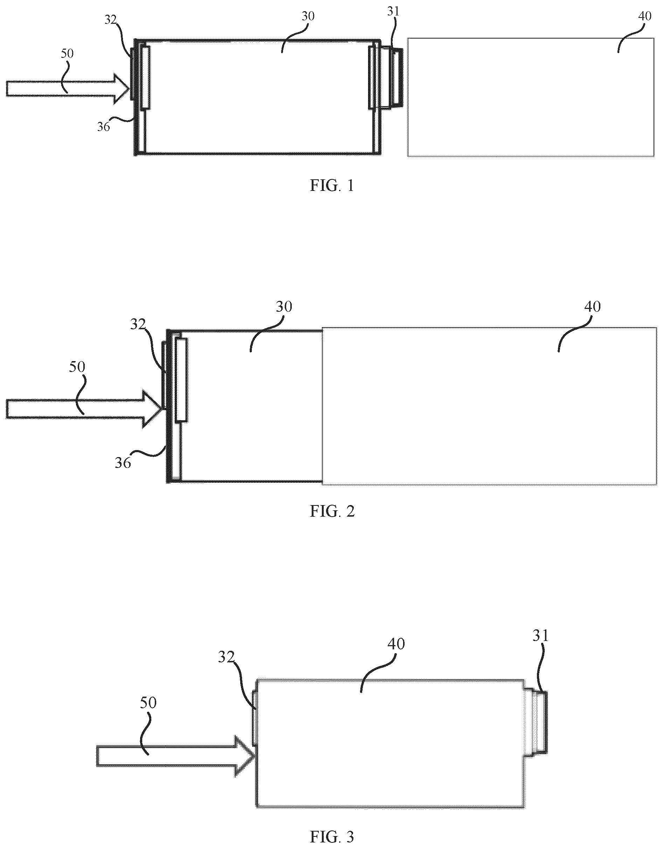

Referring to FIG. 1 to FIG. 3, the battery unit includes a cell 30, an aluminum housing 40, and a negative electrode cover 36 mounted on a negative electrode of the cell 30. When assembling the cell 30 into the aluminum housing 40, the operator generally uses a push rod 50 to push the negative electrode cover 36 to indirectly push the cell 30, thereby assembling the cell 30 into the aluminum housing 40. However, in the process of assembling the cell 30 into the aluminum housing 40, the negative electrode cover 36 is pushed only by the push rod 50, and the contact position between the cell 30 and the negative electrode cover 36 is stressed greatly, which easily causes damage to the cell 30.

In view of this, embodiments of the present disclosure provide a spacer 10, a battery unit, and a vehicle. The spacer 10, the battery unit, and the vehicle are described in detail below with reference to the accompanying drawings, and the following embodiments and features in the implementations may be combined with each other without conflict.

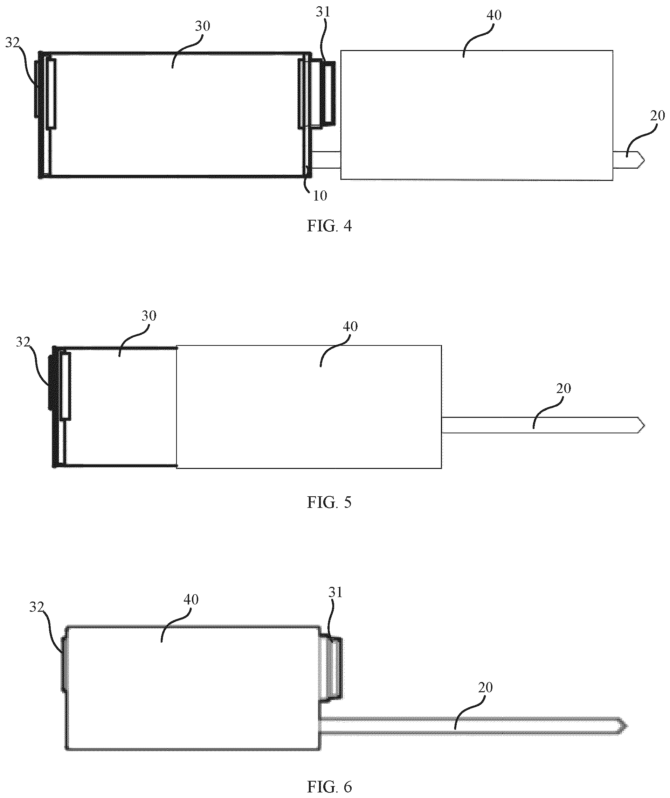

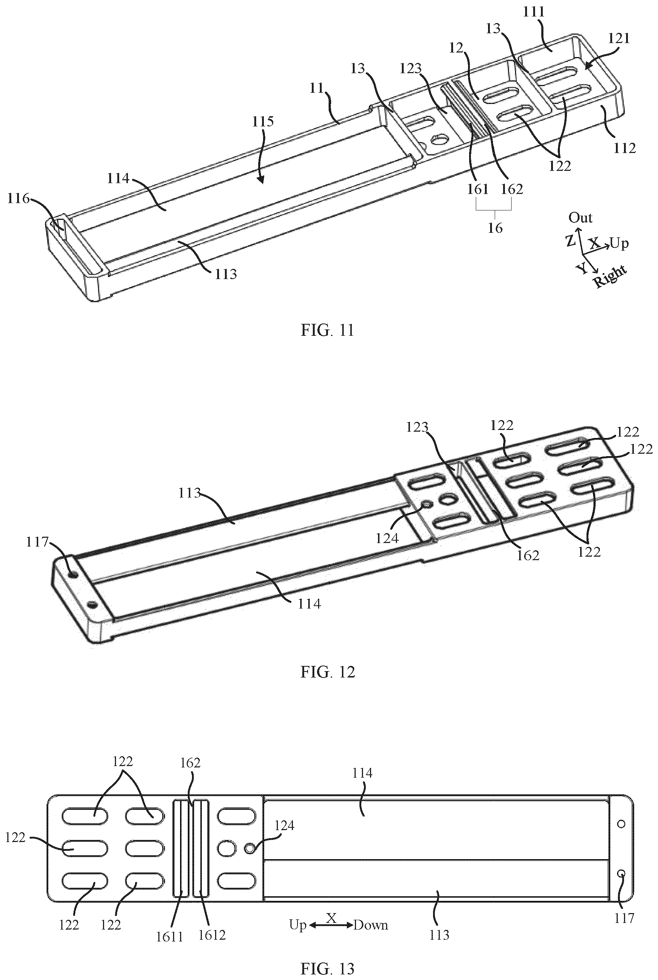

Referring to FIG. 4 to FIG. 15, the embodiments of the present disclosure provide a spacer 10 that can be applied to a cell 30 of a battery unit, as shown in FIG. 11, the spacer 10 includes a spacer body 11 and a traction member 16; the spacer body 11 includes a first side wall 111, a second side wall 112, and a base 12; the base 12 is separately connected to the first side wall 111 and the second side wall 112; the first side wall 111, the second side wall 112, and the base 12 form a pressure relief groove 121; the traction member 16 is formed in the pressure relief groove 121 and is fixedly connected to the spacer body 11; and the traction member 16 can be applied with a traction force to drive the spacer 10 to move.

In this way, when the cell 30 is assembled into the housing 40, the operator may, through the connection between the traction device 20 and the traction member 16 of the spacer 10, pull the cell 30 into the housing 40 by using the traction device 20. Compared to the solution of pushing the negative electrode cover 36 through the push rod 50 to push the cell 30 into the housing 40, the present solution can reduce the risk of damage to the cell 30 caused by excessive pushing force. In addition, the traction member 16 is formed in the pressure relief groove 121, which can enhance the structural strength of the pressure relief groove 121 and improve the ability of the pressure relief groove 121 to resist deformation.

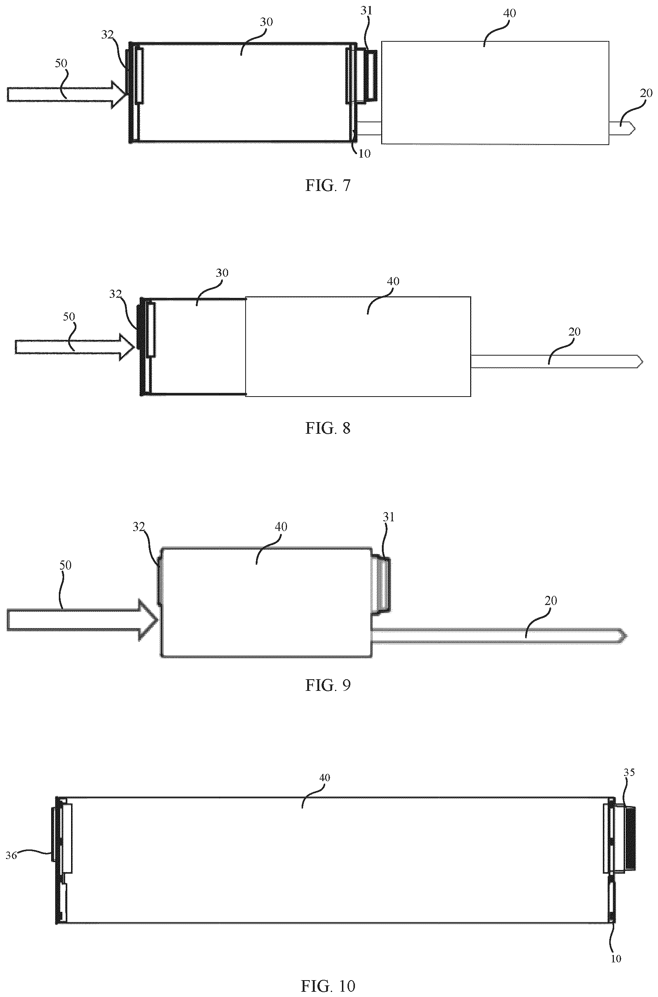

The specific assembly process of the cell 30 may refer to FIG. 4, FIG. 5, and FIG. 6, and the operator only pulls the traction member 16 of the spacer 10 through the traction device 20 to assemble the cell 30 into the housing 40. In another embodiment, referring to FIG. 7, FIG. 8, and FIG. 9, the operator may push the negative electrode cover 36 of the battery unit by using the push rod 50 while pulling the traction member 16 of the spacer 10 by using the traction device 20, to assemble the cell 30 into the housing 40. It may be understood that the foregoing descriptions are merely two assembly methods provided in the embodiment, and in fact, the present disclosure is not limited to the foregoing assembly methods.

Reference is made to FIG. 11, FIG. 12, FIG. 13, FIG. 14, and FIG. 15. In an embodiment, the traction member 16 includes a traction rib 161 and a first reinforcing member 162 that are connected with each other, and the first reinforcing member 162 is fixedly connected to the first side wall 111 and the second side wall 112. The traction rib 161 is connected to the first reinforcing member 162, and when the traction device 20 pulls the traction rib 161, the first reinforcing member 162 can provide a support force for the traction rib 161 to prevent the traction rib 161 from being broken. Moreover, the traction rib 161 has a simple structure, is easy to be processed, and can be easily applied in the industry. In addition, in the embodiment, the first reinforcing member 162 is further connected to the first side wall 111 and the second side wall 112, which can greatly improve the structural strength of the spacer body 11 and the pressure relief groove 121. In another embodiment (not shown), the first reinforcing member 162 may be fixedly connected to only one of the first side wall 111 and the second side wall 112, and the first reinforcing member 162 may be fixedly connected to the base 12. In another embodiment (not shown), the traction member 16 may include only the traction rib 161, and the traction rib 161 may be fixedly connected to the first side wall 111 and/or the second side wall 112, or may be fixedly connected to the base 12. In other embodiments (not shown), the spacer body 11 may further include an upper wall and a lower wall; the upper wall, the lower wall, the first side wall 111, and the second side wall 112 form a frame, and the traction rib 161 may be fixedly connected to the upper wall and/or the lower wall.

The first reinforcing member 162 has various structures and shapes, and the shape of the first reinforcing member 162 may be block, plate, spherical, linear, or the like. The shape of the traction rib 161 may be a strip-shaped rib, a square rib, a spherical rib, or the like, but is not limited thereto.

In the embodiment shown in FIG. 11, the first reinforcing member 162 has a flat plate structure, and the first reinforcing member 162 extends in the Z direction and the Y direction shown in FIG. 11, and is perpendicular to both the first side wall 111 and the second side wall 112.

In an embodiment, the traction rib 161 is fixedly connected to the first reinforcing member 162. That is, the traction rib 161 may extend upward (for example, in the X direction) from the first reinforcing member 162 to facilitate connection with the traction device 20.

In some embodiments, the traction rib 161 is protrusively provided on the first reinforcing member 162. In this way, while ensuring that the traction rib 161 is connected to the traction device 20, space in the pressure relief groove 121 is occupied as little as possible, which facilitates the overall layout design of the spacer 10.

In an embodiment, the traction rib 161 includes a first traction portion 1611 and a second traction portion 1612 that are coaxially arranged, and the first traction portion 1611 and the second traction portion 1612 are protrusively provided on two sides of the first reinforcing member 162 in the X-axis, respectively. As shown in FIG. 13, the first traction portion 1611 protrudes above the first reinforcing member 162 (for example, in a positive direction along the X-axis), and the second traction portion 1612 protrudes below the first reinforcing member 162 (for example, in a negative direction along the X-axis).

In this way, the traction device 20 can be snaped with the first traction portion 1611 and the second traction portion 1612 of the traction rib 161 at the same time, which improves the traction area between the traction rib 161 and the traction device 20 while ensuring the rigidity of the traction rib 161, such that the traction device 20 is more stable during the process of pulling the spacer 10.

In an embodiment, the first traction portion 1611 and the second traction portion 1612 are symmetrically disposed on a plane on which the first reinforcing member 162 is located. The above arrangement can make the forces applied to the first traction portion 1611 and the second traction portion 1612 approximately equal. Thereby, the force applied to the spacer 10 is relatively uniform during the process of being pulled, and the movement deviation is avoided.

In an embodiment, the first side wall 111 and the second side wall 112 are spaced apart in a first direction (Y direction shown in FIG. 11), and the traction rib 161 further extends in the first direction. It is easy to understand that this design can also increase the traction area between the traction rib 161 and the traction device 20, such that the traction device 20 is more stable during the process of pulling the spacer 10.

In some embodiments, the traction rib 161 is further fixedly connected to the first side wall 111 and the second side wall 112 to further enhance the structural strengths of the spacer body 11 and the pressure relief groove 121. In another embodiment, the traction rib 161 may be fixedly connected to one of the first side wall 111 and the second side wall 112.

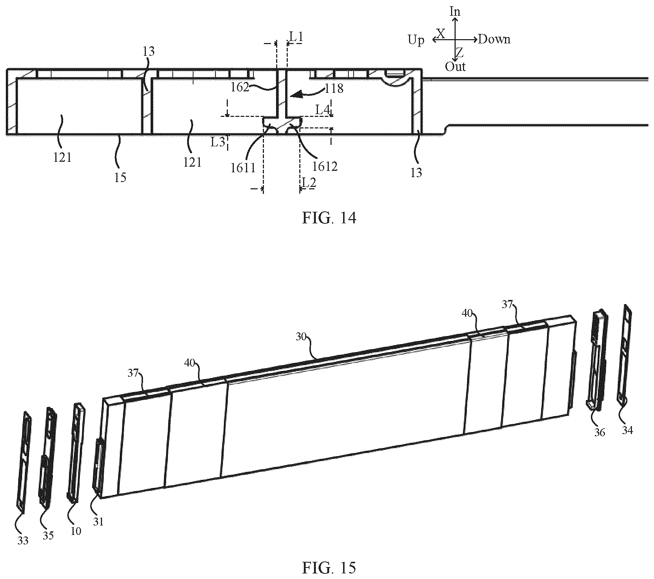

In order to improve the strength of the traction rib 161 and ensure a large traction area between the traction rib 161 and the traction device 20 for convenient traction. In a specific embodiment, as shown in FIG. 14, a thickness L1 of the first reinforcing member 162 (an X-direction dimension of the first reinforcing member 162) may be 1mm to 10mm. That is, L1 is greater than or equal to 1mm and less than or equal to 10mm, to provide a better support effect for the traction rib 161. A thickness L4 of the traction rib 161 (a Z-direction dimension of the traction rib 161) may be equal to the thickness of the first reinforcing member 162, that is, L4 is greater than or equal to 1mm and less than or equal to 10mm, to improve the strength of the traction rib 161. The thickness of the traction rib 161 and the thickness of the first reinforcing member 162 are embodiments of the present disclosure, and are not intended to limit the present disclosure. For example, the thicknesses of the first reinforcing member 162 and the traction rib 161 may be 0.9mm, 10mm, 11mm, 12mm, 15mm, etc., but are not limited thereto.

In some embodiments, the spacer body 11 has a first opening 15 facing the outer side (that is, the side away from the cell 30, for example, the positive direction of the Z direction), a plane in which an open end of the first opening 15 is located serves as a first surface, a distance between a surface of the inner side of the traction rib 161 and the first surface is greater than a thickness of the traction rib 161, in other words, a distance between the first surface and a surface of the traction rib 161 away from the first surface is greater than a thickness of the traction rib 161. In other words, the distance between the traction rib 161 and the first surface on which the first opening 15 is located needs to meet the foregoing condition, such that the traction rib 161 can be prevented from protruding from the first surface due to factors such as deformation during pulling, thereby improving stability during pulling.

In an embodiment, as shown in FIG. 12, the base 12 is provided with at least one pressure relief hole 122, such that the pressure relief groove 121 can communicate with the cell 30. There may be one or more pressure relief holes 122, and the shape of the pressure relief hole 122 may be waist-shaped, circular, elliptical, rectangular, and/or the like. When a fault occurs inside the cell 30 to generate a large amount of gas, the pressure relief groove 121 may discharge the gas inside the cell 30 in time through the pressure relief hole 122, such that expansion of the cell 30 can be effectively avoided, an explosion accident of the cell can be prevented, and a safety hazard of the cell can be effectively reduced. Therefore, it is easy to understand that the pressure relief groove 121 will bear a large gas pressure when discharging gas, such that the above traction rib 161 and the first reinforcing member 162 are arranged in the pressure relief groove 121, which can strengthen the strength of the pressure relief groove 121 and is not easily damaged by the pressure of the gas.

In the embodiments shown in FIG. 11 and FIG. 12, the pressure relief holes 122 are provided in a plurality of rows, the plurality row of pressure relief holes 122 are spaced apart in the second direction (X direction), each row of the pressure relief holes 122 includes a plurality of pressure relief holes 122, and the shape of a pressure relief hole 122 is a waist-shaped hole, but it is not limited thereto. The waist-shaped holes typically have a smaller exit diameter and a larger interior space, which enables gas to be released through the orifice in a relatively uniform manner. Compared with holes of other shapes, the waist-shaped holes can better control the flow of gas and reduce the pressure difference generated during gas release, thereby improving the pressure relief effect. The base 12 is further provided with a glue injection hole 124. The size of the pressure relief hole 122 in the region corresponding to the glue injection hole 124 is designed to be smaller than the size of the pressure relief hole 122 in other regions.

In an embodiment, the base 12 is further provided with a hollow region 123, and the hollow region 123 corresponds to a region where the traction rib 161 is located. On the one hand, the hollow region 123 can facilitate the traction device 20 to pull the traction rib 161; on the other hand, the hollow region 123 is in communication with the cell 30 and the pressure relief groove 121, respectively, and can play substantially the same role as the pressure relief hole 122, thereby further improving the pressure relief capability of the pressure relief groove 121. In some embodiments, a spacing 118 is further provided between the traction rib 161 and the base 12, which can facilitate the connection between the traction device 20 and the traction rib 161.

In an embodiment, as shown in FIG. 11, the spacer 10 further includes at least one second reinforcing member 13; the second reinforcing member 13 connects the first side wall 111 and the second side wall 112; the first reinforcing member 162 and the second reinforcing member 13 are arranged in parallel and spaced apart, and a distance between the first reinforcing member 162 and the second reinforcing member 13 is designed to be greater than the preset distance. It is easy to understand that the more reinforcing members there are, the greater the structural strength of the spacer body 11 can be improved. Therefore, on the premise of improving the structural strength of the spacer body 11, the distance between the first reinforcing member 162 and the second reinforcing member 13 is designed to be greater than the preset distance, which can prevent the second reinforcing member 13 from interfering with the traction device 20.

It should be noted that the preset distance needs to be specifically designed according to the model and size of the traction device 20, and therefore, a specific value of the preset distance is not limited in the embodiment of the present disclosure, and may be specifically arranged by a person skilled in the art according to an actual situation.

In some embodiments, a plurality of second reinforcing members 13 may be provided, the plurality of second reinforcing members 13 are spaced apart in the second direction (for example, the X direction), and one second reinforcing member 13 may be provided between two rows of pressure relief holes 122 that are adjacent.

In the embodiments shown in FIG. 11 and FIG. 12, the second reinforcing member 13 may be a flat plate structure. Two second reinforcing members 13 are provided, and the first reinforcing member 162 is between two second reinforcing members 13.

In an embodiment, the spacer body 11 further includes a bottom wall 113; the bottom wall 113 is respectively connected to the first side wall 111 and the second side wall 112 to form an accommodating groove 115; the bottom wall 113 is provided with a gap 114, and the gap 114 is in communication with the accommodating groove 115 to enable a tab of the cell 30 passing through the gap 114, and the tab is partially accommodated in the accommodating groove 115. In some embodiments, the bottom wall 113 is not a fully enclosed surface, and the bottom wall 113 has a gap 114. By accommodating a partial structure of the tab in the accommodating groove 115, the tab may be separated from the housing 40, such that the tab and the housing 40 are kept in an insulating state, thereby effectively preventing a battery short circuit fault caused by contact between the tab and the housing 40, and improving safety of the battery unit.

In an embodiment, the shape of the accommodating groove 115 may be consistent with the shape of the spacer body 11. That is, the shape of the accommodating groove 115 may be rectangular. In an embodiment, the spacer body 11 further includes a mounting groove 116 for mounting the spacer 10 to the cell 30, a bottom wall 113 of the mounting groove 116 is provided with a mounting hole 117, and the mounting hole 117 may be used for a screw and a bolt to pass through.

An embodiment of the present disclosure further provides a battery unit, including the spacer 10 in any one of the foregoing embodiments. The battery unit further includes a cell 30, a cover, and an aluminum housing 40. The cell 30 and the spacer 10 are in the housing 40, a tab is led out from one end of the cell 30, a partial structure of the tab is accommodated in the spacer 10, and the tab passes through the spacer 10 and is connected to the cover.

It should be noted that, according to the design of the cell, the tab may be led out at one end of the cell 30 or at both ends of the cell 30, such that the spacer 10 may be provided at one end of the cell 30 or at both ends of the cell 30.

Referring to FIG. 15, in an embodiment, the battery unit includes a cell 30, a housing 40, a positive electrode cover 35, a negative electrode cover 36, a positive electrode top patch 33, and a negative electrode top patch 34, a positive tab 31 is led out of the cell 30 at an end where the positive electrode cover 35 is mounted, and a negative tab 32 is led out of the cell 30 at an end where the negative electrode cover 36 is mounted. The spacer 10 is between the cell 30 and the positive electrode cover 35, and the positive tab 31 passes through the gap 114 of the spacer 10 and is accommodated in the accommodating groove 115 of the spacer 10. The positive electrode top patch 33 is attached to the positive electrode cover 35, and the negative electrode top patch 34 is attached to the negative electrode cover 36.

An insulation film 37 is attached to the outer surface of the cell 30, and the material of the insulation film 37 includes Mylar (polyester film), but is not limited thereto. By providing the above-mentioned spacer 10, the deformation of the insulation film 37 and the frictional resistance of the inner wall of the housing 40 can be reduced, avoiding the risk of scratching the insulation film 37.

An embodiment of the present disclosure further provides a vehicle, including the spacer 10 described in any one of the foregoing embodiments and a battery unit.

The foregoing descriptions are merely some embodiments of the present disclosure, and are not intended to limit the present disclosure, and any modification, equivalent replacement, or improvement made within the spirit and principle of the present disclosure shall fall within the protection scope of the present disclosure.

## Claims

1. A spacer (10), comprising a spacer body (11) and a traction member (16),
wherein the spacer body (11) comprises a first side wall (111), a second side wall (112), and a base (12); the base (12) is connected with the first side wall (111) and the second side wall (112), respectively, to form a pressure relief groove (121); and
the traction member (16) is formed in the pressure relief groove (121) and is fixedly connected to the spacer body (11), and the traction member (16) is configured to be applied with a traction force to drive the spacer (10) to move.

2. The spacer according to claim 1, wherein the traction member (16) comprises a traction rib (161), and the traction rib (161) is fixedly connected to at least one of the first side wall (111), the second side wall (112), or the base (12).

3. The spacer according to claim 1, wherein the traction member (16) comprises a traction rib (161) and a first reinforcing member (162) connected to each other, and the first reinforcing member (162) is fixedly connected to at least one of the first side wall (111), the second side wall (112), or the base (12).

4. The spacer according to claim 3, wherein the traction rib (161) is fixedly connected to the first reinforcing member (162).

5. The spacer according to claim 4, wherein the traction rib (161) is protrusively provided on the first reinforcing member (162).

6. The spacer according to claim 3, wherein the traction rib (161) comprises a first traction portion (1611) and a second traction portion (1612) coaxially arranged; and
the first traction portion (1611) and the second traction portion (1612) are respectively protrusively provided on two sides of the first reinforcing member (162).

7. The spacer according to any one of claims 2-6, wherein the spacer body (11) has a first opening (15), a plane where an open end of the first opening (15) is located serves as a first surface, and a distance between the first surface and a surface of the traction rib (161) away from the first surface is greater than a thickness of the traction rib (161).

8. The spacer according to any one of claims 2-7, wherein the first side wall (111) and the second side wall (112) are spaced apart in a first direction; and
the traction rib (161) extends in the first direction.

9. The spacer according to any one of claims 2-8, wherein the spacer body (11) further comprises at least one second reinforcing member (13) formed in the pressure relief groove (121); and
the at least one second reinforcing member (13) is fixedly connected to the first side wall (111) and the second side wall (112), and the at least one second reinforcing member (13) is spaced apart from the first reinforcing member (162).

10. The spacer according to any one of claims 2-9, wherein the base (12) is provided with at least one pressure relief hole (122); and
a shape of the at least one pressure relief hole (122) comprises at least one of a waist shape, a circle, an ellipse, or a rectangle.

11. The spacer according to claim 10, wherein the base (12) is further provided with a glue injection hole (124).

12. The spacer according to any one of claims 2-11, wherein the base (12) is further provided with a hollow region (123), and the hollow region (123) corresponds to a region where the traction rib (161) is located.

13. The spacer according to any one of claims 2-12, wherein the spacer body (11) further comprises a bottom wall (113);
the bottom wall (113) is connected to the first side wall (111) and the second side wall (112) respectively to form an accommodating groove (115); and
the bottom wall (113) is provided with a gap (114), and the gap (114) is in communication with the accommodating groove (115) to enable a tab of a cell (30) to pass through the gap (114), and the tab is partially accommodated in the accommodating groove (115).

14. The spacer according to any one of claims 2-13, wherein the spacer body (11) further comprises a mounting groove (116) for mounting the spacer (10) to the cell (30); and
the bottom wall (113) of the mounting groove (116) is provided with a mounting hole (117), and the mounting hole (117) is used for a screw and a bolt to pass through.

15. A battery unit comprising:
a spacer (10) according to any one of claims 1-14; and
a cell (30), wherein a tab is led out from one end of the cell, and at least part structure of the tab is accommodated in the spacer (10).

16. The battery unit according to claim 15, wherein the tab comprises:
a positive tab (31) led out from an end of a positive electrode cover (35) of the cell (30), and
a negative tab (32) led out from an end of a negative electrode cover (36) of the cell (30); and
wherein the spacer (10) is between the cell (30) and the positive electrode cover (35), and the positive tab (31) is accommodated in an accommodating groove (115) in a body of the spacer (10).

17. A vehicle, comprising a spacer (10) according to any one of claims 1-14.
